# EUROPÄISCHE PATENTSCHRIFT

(11) **EP 2 601 075 B1**
(45) Veröffentlichungstag und Bekanntmachung des Hinweises auf die Patenterteilung: **15.05.2019**
(21) Anmeldenummer: 10778831.7
(22) Anmeldetag: 03.08.2010
(51) Int. Cl.: B60Q 1/26, G07B 13/04, G09F 13/04, G09F 21/04

(54) **Taxizeichenvorrichtung für Fahrzeuge**
Taxi sign apparatus for a vehicle
Dispositif indicateur de taxi pour véhicule

(43) Veröffentlichungstag der Anmeldung: 12.06.2013
(73) Patentinhaber: HELLA GmbH & Co. KGaA, 59552 Lippstadt (DE)
(72) Erfinder: SCHULZE GRONOVER, Ludwig, 59555 Lippstadt (DE); WEDDEMANN, Heribert, 59558 Lippstadt (DE); BRANDHERM, Rolf, 33449 Langenberg (DE); SCHMIDT, Joachim, 10587 Berlin (DE); MAGERMANS, Marcel, NL-2498 Den Haag (NL)
(74) Vertreter: Ostermann, Thomas
(86) Internationale Anmeldenummer: PCT/DE2010/000907
(87) Internationale Veröffentlichungsnummer: WO 2012/016551

(56) Entgegenhaltungen:
- WO-A1-02/37460
- WO-A1-2009/153951
- WO-A1-2010/128074
- DE-A1- 10 132 998
- DE-A1-102007 014 190
- DE-A1-102009 019 704
- FR-A1- 2 827 556
- US-A- 6 082 880

## Beschreibung

Die Erfindung betrifft eine Taxizeichenvorrichtung für Fahrzeuge nach dem Oberbegriff des Patentanspruchs 1.

Aus der DE 10 2007 014 190 A1 ist eine Dachzeichenvorrichtung für Fahrzeuge bekannt, die für Taxifahrzeuge eingesetzt wird. Die Dachzeichenvorrichtung weist zum einen einen langgestreckten Dachzeichenkörper auf, der die Beschriftung "TAXI" aufweist. In diesem Dachzeichenkörper ist eine Beleuchtungseinrichtung integriert, so dass die Fläche des Dachzeichenkörpers beleuchtbar ist zur Signalisierung eines Funktionszustandes des Fahrzeugs. Zum anderen weist die Dachzeichenvorrichtung einen einarmigen Dachzeichenträger auf, an dem der Dachzeichenkörper befestigt ist. Auf einer dem Dachzeichenkörper abgewandten Seite des Dachzeichenträgers ist derselbe randseitig an dem Dach des Fahrzeugs befestigt.

Aus der DE 10 2008 014 711 A1 ist eine Dachzeichenvorrichtung für Fahrzeuge bekannt, die zum einen einen Dachzeichenkörper zur Signalisierung eines Funktionszustandes des Fahrzeugs aufweist. Zum anderen weist die Dachzeichenvorrichtung einen einarmigen Dachzeichenträger auf, der mit einem Fuß an einem randseitigen Bereich des Daches befestigt ist. Der Dachzeichenträger weist einen langgestreckten Trägerarm auf, an dem der Dachzeichenkörper über eine Schraubverbindung befestigt ist. Somit ist der Dachzeichenkörper quasi über seine gesamte Länge an dem Tragarm des Dachzeichenträgers gehalten. Der Tragarm des Dachzeichenträgers erstreckt sich hierbei außerhalb des Dachzeichenkörpers.

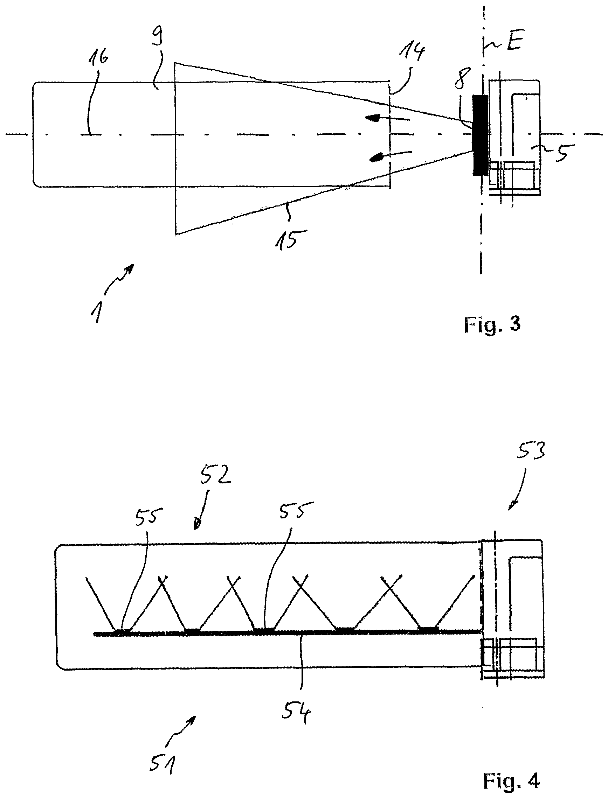

Gemäß Figur 4 ist eine Dachzeichenvorrichtung 51 für Fahrzeuge bekannt, die einen langgestreckten Dachzeichenkörper 52 zur Signalisierung eines Funktionszustandes des Fahrzeuges einerseits und einen einarmigen Dachzeichenträger 53 zur Halterung des Dachzeichenkörpers 52 andererseits aufweist. Von dem Dachzeichenträger 53 ragt ein Lichtquellentragarm 54 in den Dachzeichenkörper 52 hinein und weist auf einer Flachseite eine Anzahl von beabstandet zueinander angeordneten Lichtquellen 55 auf. Nachteilig an der bekannten Dachzeichenvorrichtung 51 ist, dass durch die Anordnung des Lichtquellentragarms 54 innerhalb des Dachzeichenkörpers 52 eine Schattenbildung eintritt, so dass keine gleichmäßige Ausleuchtung der Umfangsflächen des Dachzeichenkörpers 52 gewährleistet ist. Durch die inhomogene Ausleuchtung des Dachzeichenkörpers 52 wird die Signalwirkung des Dachzeichenkörpers 52 beeinträchtigt. Ein weiterer Nachteil ist darin zu sehen, dass durch den Lichtquellentragarm 54 unerwünscht hohe Momente bzw. Kräfte auf den Dachbereich des Fahrzeugs wirken, an dem der Dachzeichenträger 52 befestigt ist. Darüber hinaus besteht die Gefahr einer Vibrationsanfälligkeit.

Aus der WO 02/37460 A1 ist eine Dachzeichenvorrichtung für Fahrzeuge bekannt, die einen einstückig ausgebildeten Dachzeichenkörper aufweist, der an einem Dachzeichenträger befestigt ist. Ein dem Dachzeichenträger zugeordneter Basisabschnitt des Dachzeichenkörpers weist Aufnahmen für Kameras und Strahler auf. In einem sich an dem Basisabschnitt des Dachzeichenkörpers anschließenden Dachzeichenabschnitt sind eine Anzahl von querverlaufenden Leuchtröhren angeordnet. Zur Befestigung der Leuchtröhren ist ein Rahmen vorgesehen, der in dem Dachzeichenabschnitt integriert ist.

Aus der nachveröffentlichten WO 2010/128074 A1 ist eine Taxizeichenvorrichtung für Fahrzeuge mit einem Dachzeichenkörper bekannt, der langgestreckt ausgebildet ist. Der Dachzeichenkörper besteht aus einem hohlförmigen langgestreckten Hauptanzeigekörper sowie einem Zusatzanzeigekörper, wobei der Hauptanzeigekörper und der Zusatzanzeigekörper über einen Halter einer Halteeinrichtung miteinander gekoppelt sind. Der Halter ist rahmenförmig ausgebildet und weist eine den Hauptanzeigekörper von dem Zusatzanzeigekörper trennende Trägerplatte auf, auf der zu beiden Seiten Lichtquellen angeordnet sind. An einer Schmalseite des Halters schließt sich ein Fuß an, über den der Dachanzeigekörper an einem Dachrahmen des Fahrzeugs befestigt ist. Der Halter ist Teil einer Halteeinrichtung, über die der Dachanzeigekörper mit einem Dach des Fahrzeugs befestigt ist. Hierzu weist die Halteeinrichtung 2 zum einen den Halter auf, der mit einem Fuß verbunden ist. Zusätzlich umfasst die Halteeinrichtung einen Magnetfuß, der von einer Schmalseite des Hauptanzeigekörpers beabstandet zu dem Fuß abragt und sich auf der Dachfläche des Fahrzeugs abstützt.

Aus der US 6 082 880 A ist eine Taxizeichenvorrichtung für Fahrzeuge bekannt, bei der ein kreuzförmiger Dachzeichenkörper über einen Dachzeichenträger an einem Dach eines Fahrzeugs befestigt ist. Eine Lichtquelle ist an dem Dachzeichenträger befestigt und strahlt das Licht nach oben in den kreuzförmigen Dachzeichenkörper. Da die Lichtquelle als eine Glühlampe ausgebildet ist, befindet sich die Lichtquelle im Wesentlichen innerhalb des hohlförmigen Dachzeichenkörpers.

FR 2 827 556 offenbart eine Taxizeichenvorrichtung für Fahrzeuge mit einem langgestreckten Dachzeichenkörper zur Signalisierung eines Funktionszustandes eines Taxis einerseits und mit einem Dachzeichenträger zur Halterung des Dachzeichenkörpers an einem Dachbereich des Taxis andererseits, dass der Basisabschnitt des Dachzeichenkörpers einen Lichtquellenträger und/oder die Lichtquelle trägt, derart, dass das von der mindestens einen Lichtquelle aus abgesandte Lichtbündel in Richtung des Dachzeichenabschnitts emittiert wird, dass der Dachzeichenträger als ein Trägerfuß ausgebildet ist, der mittels einer Magnetkraft an dem Dachbereich befestigbar ist, dass der Dachzeichenabschnitt als eine Lichthaube ausgebildet ist, die mit ihrem Öffnungsrand an dem Basisabschnitt des Dachzeichenkörpers befestigt ist, dass der Dachzeichenabschnitt hohlförmig ausgebildet ist und an mindestens einer Längsseite ein hinterleuchtbares Dachzeichen zur Signalisierung des Funktionszustandes des Taxis aufweist, das bei eingeschalteter Lichtquelle eine Leuchtfläche bildet, wobei der Dachzeichenabschnitt lichtundurchlässig und/ oder undurchsichtige Flächen einerseits und lichtdurchlässige Flächen andererseits aufweist zur Bildung des Dachzeichens.

Aufgabe der vorliegenden Erfindung ist es daher, eine Dachzeichenvorrichtung für Fahrzeuge derart weiterzubilden, dass mit geringem Aufwand auf wirksame Weise eine homogene Ausleuchtung eines Dachzeichenkörpers der Dachzeichenvorrichtung gewährleistet ist.

Zur Lösung dieser Aufgabe weist die Erfindung die Merkmale des Patentanspruchs 1 auf.

Der besondere Vorteil der Erfindung besteht darin, dass eine homogene und relativ lichtintensive Ausleuchtung eines mit einer Dachzeichenbeschriftung (alphanumerische Zeichen) versehenen Dachzeichenkörpers ermöglicht wird einerseits und die mechanische Beanspruchung eines den Dachzeichenkörper tragenden Dachzeichenkörpers andererseits verringert wird. Grundgedanke der Erfindung ist es, den Hohlraum bzw. Innenraum des Dachzeichenkörpers von Bauteilen freizuhalten, wobei die mindestens eine Lichtquelle lediglich in einem Basisabschnitt des Dachzeichenkörpers derart angeordnet ist, dass das von derselben abgestrahlte Lichtbündel ungehindert und gezielt an die Umfangsfläche des mit einem Dachzeichen (Beschriftung alphanumerische Zeichen) versehenen Dachzeichenabschnitts des Dachzeichenkörpers gelangen kann. Es kann somit eine ungehinderte Hinterleuchtung bzw. Ausleuchtung des Dachzeichenabschnitts erfolgen, wobei die Leuchtdichte des durch die Wandung des Dachzeichenkörpers hindurch gelassenen Lichtes abhängig ist von der Lichtstärke der Lichtquelle und/oder Lichtdurchlässigkeit der Flächen des Dachzeichenabschnitts. Nach der Erfindung erfolgt eine Massenkonzentration des Dachzeichenkörpers an einem Basisabschnitt desselben, wobei sich der Basisabschnitt in unmittelbarer Nähe zu dem Dachzeichenträger befindet. Die mechanischen Anforderungen an den Dachzeichenträger können somit vorteilhaft verringert werden. Insbesondere kann die Vibrationsanfälligkeit des Dachzeichenträgers verringert werden. Dadurch, dass die Lichtquellen nunmehr nicht innerhalb eines Dachzeichenabschnitts angeordnet sind, sondern lediglich in einem Basisabschnitt, kann der Dachzeichenkörper durch Kombination des Basisabschnitts mit unterschiedlich langen oder unterschiedlich dimensionierten Dachzeichenabschnitten gebildet sein. Hierdurch wird die Variantenvielfalt von Dachzeichenkörpern auf einfache Weise erhöht. Vorteilhaft ermöglicht die Erfindung eine verbesserte Wahrnehmbarkeit des Dachzeichens bzw. eine farbintensivere Ausleuchtung desselben. Durch die Konzentration der Masse nahe einer Schwerpunktachse der Dachzeichenvorrichtung kann die Schwingungsfestigkeit der Dachzeichenvorrichtung erhöht werden. Nach der Erfindung ist ein Dachzeichenabschnitt des Dachzeichenkörpers als eine Lichthaube ausgebildet, die mit einem freien Öffnungsrand an dem Basisabschnitt des Dachzeichenkörpers befestigt ist. Der Dachzeichenabschnitt weist somit lediglich das Dachzeichen auf, das durch Einstrahlen des Lichtes in den Hohlraum des Dachzeichenabschnitts beleuchtbar ist. Innerhalb der Lichthaube befindet sich ein Leerraum, so dass eine unerwünschte Schattenbildung vermieden wird. Das eingekoppelte Lichtbündel trifft direkt auf eine Innenseite der Flächen der Lichthaube und wird in Abhängigkeit von der Lichtdurchlässigkeit der entsprechenden Fläche nach außen hin gebrochen.

Nach der Erfindung ist ein Trägerfuß des Dachzeichenträgers formschlüssig und/oder kraftschlüssig an einem Dachbereich des Fahrzeugs befestigbar. Beispielsweise kann der Trägerfuß rastend oder klemmend oder mittels einer Magnetkraft an dem Dachbereich, beispielsweise an einer Regenrinne eines Dachrandes befestigt sein. Vorteilhaft kann hierdurch eine relativ schnelle Montage bzw. Demontage der Dachzeichenvorrichtung an dem Fahrzeug vorgenommen werden.

Nach der Erfindung weist der Dachzeichenabschnitt an der Umfangsfläche zum einen eine oder mehrere lichtundurchlässige und/oder undurchsichtige Fläche sowie zum anderen eine oder mehrere lichtdurchlässige Flächen auf zur Bildung des Dachzeichens. Beispielsweise
kann das Dachzeichen durch die Beschriftung "TAXI" gebildet sein. Gegebenenfalls können auch Symbole oder andere alphanumerische Zeichen beleuchtet werden.

Nach einer Weiterbildung der Erfindung weist der Dachzeichenabschnitt eine Länge auf, die um ein Vielfaches größer ist als eine Länge des Basisabschnitts des Dachzeichenkörpers. Das Gewicht des Dachzeichenabschnitts wird somit allein durch die Masse der Umfangsfläche des Dachzeichenkörpers bestimmt, während der Basisabschnitt quasi als Gehäuseaufnahme von Bauteilen, beispielsweise Lichtquellen etc. dient.

Nach einer Weiterbildung der Erfindung sind eine Mehrzahl von LED-Leuchtelementen (LED-Chips) zur Bildung der Lichtquelle vorgesehen, so dass eine relativ homogene und betriebssichere Abstrahlung von Licht in Richtung des Dachzeichenabschnitts ermöglicht wird.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Draufsicht auf eine erfindungsgemäße Dachzeichenvorrichtung,
- Figur 2: eine Vorderansicht der Dachzeichenvorrichtung,
- Figur 3: eine Vorderansicht der Dachzeichenvorrichtung vor Zusammenfügen eines langgestreckten Dachzeichenkörpers mit einem Dachzeichenträger und
- Figur 4: eine Vorderansicht einer vorbekannten Dachzeichenvorrichtung.

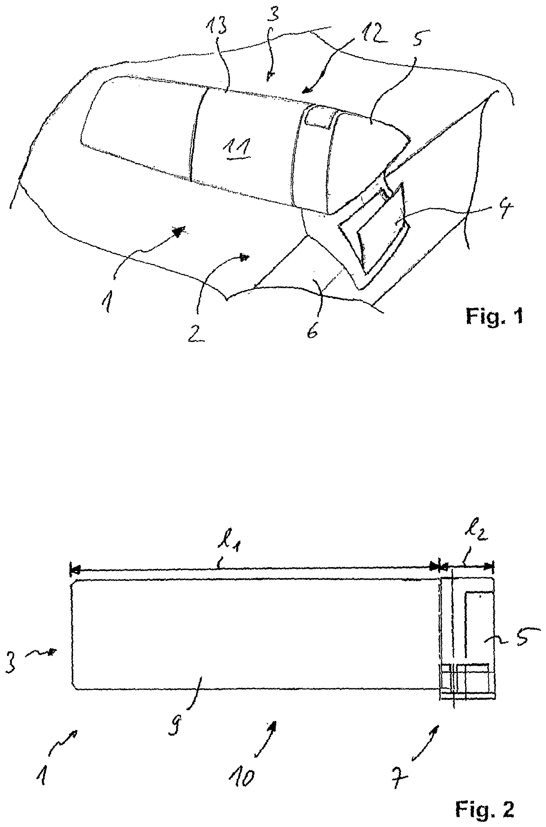

Eine Dachzeichenvorrichtung 1 für Fahrzeuge kann beispielsweise als Anzeigevorrichtung für Taxi-, Polizei-, Notarzt-, Feuerwehrzeichen oder dergleichen verwendet werden. Im nachfolgend beschriebenen Ausführungsbeispiel dient die Dachzeichenvorrichtung 1 als Taxizeichenvorrichtung, die lösbar an einem Dachbereich 2 eines Fahrzeugs befestigbar ist. Die Dachzeichenvorrichtung 1 gemäß der Ausführungsform nach den Figuren 1 bis 3 besteht im Wesentlichen aus einem langgestreckten Dachzeichenkörper 3 zur Signalisierung eines Funktionszustandes des Taxis einerseits und aus einem Dachzeichenträger 4 zur Halterung des Dachzeichenkörpers 3. an dem Dachbereich 2 des Fahrzeugs andererseits.

Der Dachzeichenträger 4 ist als ein Dachzeichenträgerfuß ausgebildet, der vorzugsweise einstückig mit einem Basisabschnitt 5 des Dachzeichenkörpers 3 verbunden ist. Der Dachzeichenträger 4 kann kraftschlüssig und/oder formschlüssig mit einem Dachrand (Regenrinne 6) des Dachbereichs 2 verbunden sein. Beispielsweise kann der Trägerfuß 4 rastend oder klemmend oder mittels einer Magnetkraft an dem Dachrand 6 oder einer annähernd ebenen Fläche des Dachbereiches 2 gehaltert sein.

Der Basisabschnitt 5 des Dachzeichenkörpers 3 erstreckt sich in einem ersten Längsbereich 7 des Dachzeichenkörpers 3 und dient im Wesentlichen zur Aufnahme der für die Signalisierung erforderlichen Bauteile, wie beispielsweise mindestens einer Lichtquelle 8, einer nicht dargestellten Trägerplatte (Lichtquellenträger) für die mindestens eine Lichtquelle 8 sowie Haltemittel zur Halterung eines Dachzeichenabschnitts 9 des Dachzeichenkörpers 3, der sich in einem zweiten Längsbereich 10 des langgestreckten Dachzeichenkörpers 3 erstreckt. Der erste Längsbereich 7 schließt sich unmittelbar an den zweiten Längsbereich 10 an. Der Dachzeichenabschnitt 9 ist als eine Lichthaube ausgebildet, die im Querschnitt dreieckförmig ausgebildet ist. Die Lichthaube 9 weist eine Unterseite auf, von deren Rand jeweils eine Vorderseite 11 und eine Rückseite 12 geneigt in vertikaler Richtung nach oben verlaufen, bis sie in einem oberen Schenkelbereich 13 des Dachzeichenabschnitts 9 zusammenlaufen. Die Vorderseite 11 und die Rückseite 12 weisen jeweils als kontrastreiche Beschriftung ein nicht dargestelltes Taxizeichen "TAXI" auf, das eine Kombination von lichtundurchlässigen und/oder undurchlässigen Flächen (Flächenanteilen) einerseits und lichtdurchlässigen Flächen (Flächenanteilen) andererseits zur Bildung des Dachzeichens "TAXI" aufweist. Die Lichthaube 9 kann aus einem Kunststoffmaterial hergestellt sein, wobei die lichtdurchlässige Fläche gelb eingefärbt und die lichtundurchlässige Fläche schwarz eingefärbt ist.

Die Lichthaube 9 ist auf einer dem Basisabschnitt 5 abgewandten Seite geschlossen ausgebildet. Auf einer dem Basisabschnitt 5 zugewandten Seite ist der Dachzeichenabschnitt 9 mit einem Öffnungsrand 14 an dem Basisabschnitt 5 befestigt. Der Dachzeichenabschnitt 9 weist eine Länge l₁ auf, die um ein Vielfaches größer ist als eine Länge L₂ des Basisabschnitts 5. Die Länge des Dachzeichenkörpers 3 wird somit maßgeblich durch den langgestreckten Dachzeichenabschnitt 9 geprägt. Ein Innenraum des Dachzeichenabschnitts 9 ist leer bzw. frei von Bauteilen ausgebildet.

Zur Beleuchtung bzw. Hinterleuchtung der Vorderseite 11 und der Rückseite 12 des Dachzeichenabschnitts 9, beispielsweise zur Signalisierung des Funktionszustandes "frei" des Taxifahrzeugs, ist die mindestens eine Lichtquelle 8 bzw. der Lichtquellenträger derart ausgerichtet, dass ein von der Lichtquelle 8 abgestrahltes Lichtbündel 15 in Richtung des Dachzeichenabschnitts 9 abgestrahlt wird. Eine optische Achse 16 der Lichtquelle 8 erstreckt sich im Wesentlichen parallel zu einer Längsachse des Dachzeichenabschnitts 9 bzw. parallel zur Längserstreckung des Dachzeichenabschnitts 9. Dadurch, dass das Lichtbündel 15 in Form eines Lichtkegels abgestrahlt wird, werden alle Flächenbereiche der Vorderseite 11 und der Rückseite 12 erfasst und somit beleuchtet. Zumindest die wirksamen Längsseiten, nämlich die Vorderseite 11 und die Rückseite 12 des hohlförmigen Dachzeichenabschnitts 9, bilden bei eingeschalteter Lichtquelle 8 eine Leuchtfläche, die im Vergleich zum nicht eingeschalteten Zustand der Lichtquelle 8 eine erhöhte Signalstärke aufweisen. Dadurch, dass keine störenden Bauteile innerhalb des Dachzeichenabschnitts 9 angeordnet sind, kann keine Schattenbildung erfolgen. Vielmehr wird hierdurch eine Homogenisierung der Leuchtflächen bewirkt. Die Lichtquelle 8 befindet sich innerhalb des Basisabschnitts 5 bzw. in einem Übergangsbereich zwischen dem Basisabschnitt 5 und dem Dachzeichenabschnitt 9.

Wie aus Figur 3 ersichtlich ist, kann die Lichtquelle 8 in einer Querebene E des Dachzeichenkörpers 3 angeordnet sein, die in Umfangsrichtung von dem Dachzeichenabschnitt 9 umgeben ist. Wesentlich ist, dass ein überwiegender Teil des ersten Längsbereichs 7 des Dachzeichenabschnitts 9 frei von Schatten bildenden Bauteilen gehalten ist.

Die mindestens eine Lichtquelle 8 kann als eine Glühlampe oder als ein LED-Leuchtelement (LED-Chip) ausgebildet sein. Beispielsweise können mehrere LED-Chips auf einer gemeinsamen Trägerplatte angeordnet sein.

Nach einer nicht dargestellten Ausführungsform der Erfindung können Lichtleitelemente, beispielsweise Lichtleitfinger aus einem transparenten Kunststoff auch ausgehend von der Lichtquelle 8 in den Innenraum des Dachzeichenabschnitts 9 hineinragen. Da diese transparent ausgebildet sind, führen sie nicht zu einer unerwünschten Schattenbildung.

## Patentansprüche

1. Taxizeichenvorrichtung für Fahrzeuge
- mit einem langgestreckten Dachzeichenkörper (3) zur Signalisierung eines Funktionszustandes eines Taxis einerseits und
- mit einem Dachzeichenträger (4) zur Halterung des Dachzeichenkörpers (3) an einem Dachbereich (2) des Taxis andererseits,
- dass der Dachzeichenkörper (3) in einem ersten Längsbereich (7) desselben aus einem Basisabschnitt (5) zur Aufnahme mindestens einer Lichtquelle (8) und in einem sich an den ersten Längsbereich (7) in Längserstreckung anschließenden zweiten Längsbereich (10) aus einem Dachzeichenabschnitt (9) besteht,
- dass der Basisabschnitt (5) des Dachzeichenkörpers (3) einen Lichtquellenträger und/oder die Lichtquelle (8) trägt, derart, dass das von der mindestens einen Lichtquelle (8) aus abgesandte Lichtbündel (15) in Richtung des Dachzeichenabschnitts (9) emittiert wird,
- dass der Basisabschnitt (5) des Dachzeichenkörpers (3) einstückig mit dem Dachzeichenträger (4) verbunden ist,
- dass der Dachzeichenträger (4) als ein Trägerfuß ausgebildet ist, der kraftschlüssig und/oder formschlüssig, insbesondere rastend oder klemmend oder mittels einer Magnetkraft an dem Dachbereich (2) befestigbar ist,
- dass der Dachzeichenabschnitt (9) als eine Lichthaube ausgebildet ist, die mit ihrem Öffnungsrand (14) in Längserstreckung an dem Basisabschnitt (5) des Dachzeichenkörpers (3) befestigt ist,
- dass der Dachzeichenabschnitt (9) hohlförmig ausgebildet ist und an mindestens einer Längsseite (11, 12) ein hinterleuchtbares Dachzeichen zur Signalisierung des Funktionszustandes des Taxis aufweist, das bei eingeschalteter Lichtquelle (8) eine Leuchtfläche bildet, wobei der Dachzeichenabschnitt (9) lichtundurchlässig und/oder undurchsichtige Flächen einerseits und lichtdurchlässige Flächen andererseits aufweist zur Bildung des Dachzeichens.

2. Dachzeichenvorrichtung nach Anspruch 1, **dadurch gekennzeichnet, dass** der Dachzeichenabschnitt (9) eine Länge (l₁) aufweist, die um ein Vielfaches größer ist als eine Länge (l₂) des Basisabschnitts (5).

3. Dachzeichenvorrichtung nach Anspruch 1 oder 2, **dadurch gekennzeichnet, dass** ein Innenraum des Dachzeichenabschnitts (9) leer ausgebildet ist.

4. Dachzeichenvorrichtung nach einem der Ansprüche 1 bis 3, **dadurch gekennzeichnet, dass** die Lichtquelle (8) als eine Glühlampe oder als ein LED-Leuchtelement ausgebildet ist.

## Claims

1. A taxi sign apparatus for a vehicle
- having, on the one hand, an elongated roof sign body (3) for signaling a functional state of a taxi and
- having, on the other hand, a roof sign carrier (4) for supporting the roof sign body (3) on a roof area (2) of the taxi,
- such that the roof sign body (3) consists of a base portion (5) for receiving at least one light source (8) in a first longitudinal section (7) of said roof sign body and of a roof sign portion (9) in a second longitudinal section (10) which adjoins the first longitudinal section (7) in longitudinal extension,
- such that the base portion (5) of the roof sign body (3) carries a light source carrier and/or the light source (8), such that the light beam (15) which is radiated from the at least one light source (8) is emitted in the direction of the roof sign portion (9),
- such that the base portion (5) of the roof sign body (3) is integrally connected to the roof sign carrier (4),
- such that the roof sign carrier (4) is formed as a support pedestal, said support pedestal being attachable to the roof area (2) in a force-locking and/or interlocking manner, in particular in a latching or clamping manner, or by means of a magnetic force,
- such that the roof sign portion (9) is formed as a light hood, said light hood being attached with the opening rim (14) thereof to the base portion (5) of the roof sigh body (3) in longitudinal extension,
- such that the roof sign portion (9) is hollow and has, on at least one longitudinal side (11, 12), a roof sign which is able to be illuminated from behind for signaling the functional state of the taxi and forms an illuminated surface when the light source (8) is switched on, wherein the roof sign portion (9) has light-impermeable and/or opaque surfaces on the one hand and translucent surfaces on the other hand to form the roof sign.

2. The roof sign apparatus according to Claim 1, **characterized in that** the roof sign portion (9) has a length (l₁) which is several times larger than a length (l₂) of the base portion (5).

3. The roof sign apparatus according to Claim 1 or 2, **characterized in that** an interior of the roof sign portion (9) is empty.

4. The roof sign apparatus according to any one of Claims 1 to 3, **characterized in that** the light source (8) is formed as a light bulb (8) or as an LED lighting element.

## Revendications

1. Dispositif indicateur de taxi pour véhicules automobiles
- avec un corps d'indicateur pour toit (3) allongé pour la signalisation d'un état fonctionnel d'un taxi, d'une part, et
- avec un support d'indicateur pour toit (4) pour la fixation du corps d'indicateur pour toit (3) dans une section (2) du toit du taxi, d'autre part,
- une première partie longitudinale (7) du corps d'indicateur pour toit (3) consistant en une section de base (5) destinée à la réception d'au moins une source de lumière (8), et une deuxième partie longitudinale (10), faisant suite à la première partie longitudinale (7) dans le sens longitudinal, consistant en une section d'indicateur pour toit (9),
- la section de base (5) du corps d'indicateur pour toit (3) portant un support de source de lumière et / ou la source de lumière (8) de manière à ce que le faisceau lumineux (15), émit par l'au moins une source de lumière (8) en direction de la section d'indicateur pour toit (9),
- la section de base (5) du corps d'indicateur pour toit (3) étant reliée d'une pièce au support d'indicateur pour toit (4),
- le support de 'indicateur pour toit (4) présentant la forme d'un pied de support, qui peut être fixé dans la section de toit (2) par adhérence et / ou par engagement géométrique, en particulier par encliquetage ou serrage ou au moyen d'aimants,
- la section d'indicateur pour toit (9) présentant la forme d'un dôme lumineux, fixé, dans le sens longitudinal, par le bord de son ouverture (14) à la section de base (5) du corps d'indicateur pour toit (3),
- la section d'indicateur pour toit (9) étant de conception creuse et présentant, sur au moins un côté longitudinal (11, 12), un indicateur pour toit, qui, pouvant être éclairé de l'arrière pour la signalisation d'un état de fonctionnement du taxi, forme une surface lumineuse lorsque la source de lumière (8) est connectée, sachant que la section d'indicateur pour toit (9) est imperméable à la lumière et / ou présente des aires imperméables à la lumière, d'une part, et des aires perméables à la lumière, d'autre part, afin de former l'indicateur pour toit.

2. Dispositif indicateur pour toit selon la revendication 1, **caractérisé en ce que** la section de l'indicateur pour toit (9) présente une longueur (1₁) plusieurs fois plus grande qu'une longueur (1₂) de la section de base (5).

3. Dispositif indicateur pour toît selon revendication 1 ou 2, **caractérisé en ce qu'**un espace intérieur de la section de l'indicateur pour toit (9) est réalisée sous la forme d'un espace vide.

4. Dispositif indicateur pour toît selon l'une des revendications 1 à 3, **caractérisé en ce que** la source de lumière (8) consiste en une ampoule électrique ou en un élément d'éclairage LED.
